(19) Europäisches Patentamt

European Patent Office

Office européen des brevets

(11) **EP 1 269 221 B1**

(12) **EUROPEAN PATENT SPECIFICATION**

(45) Date of publication and mention
of the grant of the patent:
**26.04.2006 Bulletin 2006/17**

(51) Int Cl.:
*G01R 33/44* (2006.01)     *G01N 24/08* (2006.01)

(21) Application number: **01908093.6**

(22) Date of filing: **27.02.2001**

(86) International application number:
**PCT/IL2001/000182**

(87) International publication number:
**WO 2001/065282 (07.09.2001 Gazette 2001/36)**

(54) **METHODS AND APPARATUS FOR NON-DESTRUCTIVE CONTROL AND FORECASTING CONCRETE STRENGTH**

VERFAHREN UND VORRICHTUNGEN ZUR ZERSTÖRUNGSFREIEN STEUERUNG UND VORHERSAGE DER BETON-BELASTUNGSFÄHIGKEIT

PROCEDES ET APPAREILS DE COMMANDE NON-DESTRUCTIVE ET PREVISION DE LA RESISTANCE D'UN BETON

(84) Designated Contracting States:
**AT BE CH CY DE DK ES FI FR GB GR IE IT LI LU MC NL PT SE TR**
Designated Extension States:
**AL LT LV MK RO SI**

(30) Priority: **29.02.2000 IL 13479900**

(43) Date of publication of application:
**02.01.2003 Bulletin 2003/01**

(73) Proprietor: **Concretec Ltd.**
**91450 Jerusalem (IL)**

(72) Inventors:
• **SHTAKELBERG, David**
**97841 Jerusalem (IL)**
• **BOIKO, Shimon**
**90970 Har Adar (IL)**
• **WILGE, Boris**
**73133 Doar Na Merkaz (IL)**

(74) Representative: **Schmitz, Jean-Marie et al**
**Dennemeyer & Associates S.A.**
**P.O. Box 1502**
**1015 Luxembourg (LU)**

(56) References cited:
**US-A- 4 769 601          US-A- 5 672 968**

• **SAADATMANESH H ET AL: "Hydration and early-age strength measurement of concrete using nuclear magnetic resonance (NMR)" NONDESTR. TEST. EVAL., vol. 12, 1995, pages 133-153, XP002282771**
• **BHATTACHARJA S ET AL: "MICROSTRUCTURE DETERMINATION OF CEMENT PASTES BY NMR AND CONVENTIONAL TECHNIQUES" ADVANCED CEMENT BASED MATERIALS, ELSEVIER, NEW YORK, NY, US, vol. 1, no. 2, 1993, pages 67-76, XP000654348 ISSN: 1065-7355**

Remarks:
The file contains technical information submitted after the application was filed and not included in this specification

**Description**

FIELD AND BACKGROUND OF THE INVENTION

The present invention relates to methods and apparatus for measuring a compressive strength of capillary-porous chemically active materials while hardening.

As used herein throughout the specification and in the claims section below the phrase "capillary-porous chemically active material(s)" includes cementitious substances, such as, but not limited to, cement, concrete, lime, gypsum, clay and the like.

Concrete, which is used for construction, must be analyzed to determine the structural properties parameters, particularly strength and other physical-mechanical properties of the final cured product, such as its potential for shrinkage.

Concrete is mainly a mixture of water, cement, sand, and gravel. It is known that the fraction of water at all stages of its preparation (e.g., mixing, compaction, curing and hardening), is one of the most crucial parameters, responsible for the strength of the final cured cement stone and concrete.

The water content in concrete appears in two main states (stages) during curing: chemically bound water and physically bound water. The relative water content in formed structure during curing permanently decreases, as a portion of the physically bound water interacts chemically with other concrete components and transforms into a solid phase, whereas another portion is evaporating away from the surface.

It is known that the amount of water that is physically bound has an important influence on the compressive strength and other physical-mechanical properties of concrete at all stages of its formation and utilization.

The traditional prior art methods for testing the strength of concrete require 28 days to complete. The builder usually does not or cannot delay construction 28 days to receive the test results. Rather, the construction usually continues in the hope that the concrete is sound. If in the final analysis, the concrete does not meet the standards, the building may have to be reinforced or even torn down, perhaps incurring major additional costs.

Thus, a method of quick analysis of concrete properties which predicts its final strength or measures the structure strength *in situ* while hardening, is very desirable.

In addition, when concrete is utilized as a strength bearing member, it would be useful to know when "shrinkage" of the concrete has been completed so as not to load the member prematurely, as the premature addition of load to bearing members could lead to cracking of the concrete structure. Shrinkage of cement stone and concrete is correlated to their moisture content. However, to a larger extent, the shrinkage value of cement stone and concrete depends on the size of pores and capillaries in the formed structure, in other words, on the energy level of physically-bound water, interacting with the solid phase.

There is a known method for determination of cement stone and concrete strength according to its porosity. To this effect, see, Roy D. M., Gouda G. R. Porosity - strength relation in porous materials with very high strength" J. Amer. Ceramic Soc., 53, No. 10, 1973, pp. 549-550. According to this method, the strength, $R$, is determined by:

$$R = -\frac{1}{k}\ln\frac{\Pi}{\Pi_0} \qquad (1)$$

where $\Pi$ is the general porosity of the cement stone (concrete); $\Pi_0$ is the porosity at zero strength ($R = 0$), which is approximately 60 %; and $k$ is a constant which equals 0.385 x 105 MPa.

There is an additional known method for determining cement stone and concrete strength, which is described by Powers T. C. "The physical structure and engineering properties of concrete" Port. Cem. Ass. Dept. Bul. 90, Chicago, July 1958.

According to this method, the volume of pores of the cement gel $V_g$, and the general volume of capillary space $V_k$ of the concrete are experimentally measured; whereas the strength is determined according to the following equation:

$$R = A\left(\frac{V_g}{V_g + V_k}\right)^n \qquad (2)$$

where $A$ and $n$ are constants.

The change of the porosity parameters $V_g$ and $V_k$ of Equation 2 during the process of hardening is well-supported by data from the literature. To this effect, see, for example, Sheikin A. E. "Structure durability and crack resistance of cement stone". Moscow, Stroyizdat, 1974, p. 191.

Table 1 below, for example, provides porosity related data for a cement stone having a water/cement (W/C) ratio of 0.7 during hardening.

**TABLE 1** *The change of general ($\Pi$), capillary ($\Pi_k$) and gel ($\Pi_g$) porosity of a cement stone at the process of hardening*

| Time of hardening (days) | ($\Pi$) | $\Pi_k$ | $\Pi_g$ |
|---|---|---|---|
| 0 | 0.70 | 0.70 | -- |
| 3 | 0.65 | 0.58 | 0.07 |
| 7 | 0.58 | 0.49 | 0.09 |
| 14 | 0.57 | 0.44 | 0.13 |
| 28 | 0.54 | 0.37 | 0.17 |

The difficulty and labor input associated with measuring the porosity of concrete and other capillary-porous chemically active materials (especially during hardening) are the shortcomings of the above mentioned methods.

This is due to the necessity to prepare a large quantity of twin-samples, each of which is tested at a particular stage of hardening.

Independent of the applied method for measuring porosity (e.g., nitric porometry, mercury porometry of low and high pressure, etc.), the tested sample should be completely dehydrated. This considerably complicates the testing method, increases its duration and considerably affects the properties of the tested material.

Since cement stone, concrete and other similar materials at any stage of hardening are poly-dispersed moist capillary-porous bodies, it is possible to avoid most of the above-mentioned shortcomings if concrete strength will be determined not by measuring its porosity, but rather by measuring the energy of physically bound water, which is contained in the pores and capillaries of its structure, which is indicative of its porosity and therefore of, for example, its strength.

Water (both in a liquid and gaseous form) is always in a state of thermodynamic equilibrium with the porous solid phase with which it interacts. Thus, the properties of water (viscosity, bounding energy, relaxation time, etc.) are changing in strict accordance with structure formation and, consequently, with the strength growth of the hardening material. To this effect, see, for example, Shtakelberg D. I. "Thermodynamics of water-silicate disperse materials structure-formation". Riga, Zinatne, 1984, p.200; and Shtakelberg D. I., Sytchov M. M. "Self-organization in disperse systems". Riga, Zinatne, 1990, p175; and Neville .M. "Properties of concrete" Longman Scientific & Technical. NT., 1988, p779.

In a newly compressed cement paste, whose strength is minimal, e.g., in the order of $10^{-1}$ Mpa, practically all the water is distributed between the grains of a non-hydrated cement. The average distance between the grains is approximately 5-10 $\mu$m. At this state, the bond energy of water molecules and the material constitutes only a few kDz/mol.

While hardening, a portion of the water becomes chemically bound, i.e., transforms into a solid state with bond energy in the order of 1000 kDz/mol. Another portion of the water is contained in the pores of the formed cement gel. The size of these pores is less than $10^{-3}$ $\mu$m in diameter and the bond energy in this case is up to 50 kDz/mol. Another portion of the water occupies capillaries of a larger diameter ($10^{-2}$-$10^{-1}$ $\mu$m) with bond energy of up to 10-20 kDz/mol.

$T_2$ relaxation time of physically-bound water, contained in capillary-porous structure of chemically-active material changes in a very wide range: from 30-40 $\mu$sec (liquid of thin surface layers) up to $3 \times 10^6$ $\mu$sec (bulk water).

During subsequent stages of concrete structure hardening and until its final formation, the water distribution reaches a steady state in which 45-50 % of the water is chemically bound, 40 % of the water occupies the smaller pores of the cement gel, whereas 10-15 % of the water occupies larger capillaries of the concrete structure.

Thus, information pertaining to the energy level of water contained in a concrete structure reflects its porosity, which, in turn reflects its strength. Therefore, it is possible to obtain a far more reliable correlation between the energy of water contained in a concrete structure and its strength.

It was already noted above that physically-chemically bound water in capillary-porous bodies always coexists in thermodynamic equilibrium with the solid phase. Nevertheless, all quality changes developing in cement stone and concrete during the process of structure forming and hardening, such as, chemical dispergation, colloidation, coagulation, crystallization, nucleation, development of inner cracks, etc., are almost immediately reflected by the energy of the liquid stage thereof. This is why, namely, the physically bound water is the most informative component of capillary-porous structures for quality evaluation of energetic level and consequently strength and other physical-mechanical properties.

There are various methods for quantitating (in terms of mass) and qualitating (in terms of energy) chemically and physically bound water in capillary-porous bodies. However, these adsorption methods, some of which are described in the references recited hereinabove, are rather complicated and labor-consuming. Moreover, performance of such measurements in areas of a high relative water vapor pressure ($\phi = p_i/p_s$) is complicated due to development of capillary condensation. In addition, adsorption methods are suitable solely for testing the samples of cement stone, concrete, etc., with a completely-formed or artificially stabilized structure.

Another method for studying the water content of concrete is neutron hydrometry (see, for example, The Troxler 4430 water/cement gauge). However, neutron hydrometry allows the sole obtainment of quantitative data (mass), whereas no qualitative data (energy) is collectable.

Methods for determining concrete strength in situ using nuclear magnetic resonance (NMR) have been developed by the inventors.

NMR methods and apparatuses are well-known for over 50 years and have found an extensive usage in various fields including, but not limited to, oil fields (from oil exploration up to quality determination of petroleum products), food production, medicine, etc. Also, there are numerous and successful applications of NMR-technology in construction and in manufacturing of building materials, particularly for determination of cement qualities.

In order to understand the basics of these methods, a short description of NMR principles is now presented.

The NMR techniques involve placing a sample in a homogeneous magnetic field which is subjected to a pulse of radio-frequency radiation. There are charged particles in the sample which undergo a Larmor precession, i.e., a common rotation superposed by the magnetic field upon the motion of the system of charged particles, all the charged particles having the same ratio of charge to mass.

The absorption of energy by the sample is almost instantaneous. However, the loss of energy, i.e., the nuclear relaxation, is a type of exponential decay process which has time constants. Relaxation occurs when stimulated by local magnetic fields having components at the Larmor frequency, i.e., the angular frequency of the Larmor precession. (The precession and frequency are named after Sir Joseph Larmor, British physicist, who died in 1942.)

There are two distinct types of nuclear relaxation: spin-lattice relaxation and spin-spin relaxation.

Spin-lattice relaxation is an energy effect, and is the loss of the excess energy resulting from the excitation pulse to the surroundings, or lattice, as thermal energy. The time constant associated with spin-lattice relaxation is called $T_1$.

Spin-spin relaxation is an entropy effect, and is related to the loss of stage coherence induced by the excitation pulse. The time constant associated with spin-spin relaxation is called $T_2$.

There are various imaging methods which make use of either the spin-lattice or spin-spin relaxation. One is the constant-time imaging (CTI) method, a variation of which is the single-point imaging (SPI) method. Another method is called the spin-echo method, in which the radio-frequency field is applied in a sequence of two kinds of pulses, separated by a time interval $t_e$, and a decayed sequence of echoes are observed after each pulse.

U.S. Pat. No. 4,769,601 describes a method and apparatus for determining the extent of setting of cement and its strength as it sets by means of a pulsed NMR spectrometer. $T_1$ measurements are made while agitating the cement to simulate transportation and placement thereof.

There are articles in the scientific literature describing the use of NMR to study chemical dynamics of cement hydration. M. Bogdan *et al.,* "Single-Point Imaging of Partially Dried, Hydrated White Portland Cement", J. of Magnetic Resonance, Series A, 116:266-269 discuss using the SPI method. The article states that "several groups have attempted to image water invasion of cured concrete samples using spin-echo imaging methods". These attempts are reported by J. Link *et al.,* Magn. Reson. Imaging, 12:203, and F. Papavassillou *et al.,* J. Am. Ceram. Soc., 76:2109. In regard to these attempts, Bogdan *et al.* state that "the spin-spin relaxation times of water in these dehydration experiments is only a few milliseconds, so the quality of traditional spin-echo images is disappointing". Bogdan *et al.* also state that in their study, "short echo-time, one-dimensional, spin-echo profiles of moist cured white-cement paste cylinders displayed poor signal-to-noise and geometric distortions from the ideal profile geometry".

Other scientific articles describing the use of NMR to study chemical dynamics of cement hydration, and which all do not use spin-echo methods or fail to successfully use spin-echo methods, include E. Laganas *et al.,* "Analysis of Complex H-1 NMR Relaxation Measurements in Developing Porous Structures--A Study in Hydrating Cement", J. Applied Physics, 77:3343-3348; H. C. Gran, "Fluorescent Liquid Replacement Technique, A Means of Crack Detection and /Binder Ratio Determination in High-Strength Concretes", Cement & Concrete Res., 25:1063-1074; J. Kaufmann *et al.,* "One-Dimensional Water Transport in Concrete", Materials & Structures, 28:115-124; S. Kwan *et al.,* "Si-29 and Al-27 MASNMR Study of Stratlingite", J. Amer. Ceram. Soc., 78:1921-1926; R. A. Hanna *et al.,* "Solid State Si-29 and Al-27 NMR and FTIR Study of Cement Pastes Containing Industrial Wastes and Organics", Cement & Concrete Res., 25: 1435-1444; X. D. Cong *et al.,* "Effects of the Temperature and Relative Humidity on the Structure of C-S-H Gel", Cement & Concrete Res., 25:1237-1245; S. U. Aldulaijan *et al.,* "Si-29 MASNMR Study of Hydrated Cement Paste and Mortar Made With and Without Silica Fume", J. Amer. Ceram. Soc., 78:342-346; A. R. Brough *et al.,* "A Study of the Pozzolanic Reaction by Solid State Si-29 NMR Using Selective Isotopic Enrichment", J. Materials Sci., 30:1671-1678; Y. Okada *et al.,* "Influence of Starting Materials on the Formation of 1.1-NM-Tobermorite", J. Ceram. Soc. of Japan, 102:1148-1153; L. J. Schreiner *et al.,* "NMR Line Shape-Spin-Lattice Relaxation Correlation Study of Portland Cement Hydration", J. Am. Ceram. Soc., 68[1]:10-16; R. Blinc *et al.,* "NMR Relaxation Study of Adsorbed Water in Cement and Tricalcium Silicate Pastes", J. Am. Ceram. Soc., 61[1]:35-39; and L. Barbic *et al.,* "The Determination of Surface Development in Cement Pastes by NMR", J. Am. Ceram. Soc., 65[1]:25-30.

Thus, although using $T_1$ measurements to determine properties of concrete while hardening is well known, the very short $T_2$ relaxation times make it desirable to develop a method which uses $T_2$ measurements instead of $T_1$, because the concrete property information is obtained much quicker. The present invention provides such methods.

A method involving $T_2$ measurements for determining concrete strength, potential shrinkage, and readiness to accept coverings on concrete samples *in situ* is described in U.S. Pat. No. 5,672,968.

Column 1, lines 20-24 of U.S. Pat. No. 5,672,968 (hereinafter '968), recites:

> The water in concrete appears in three states during curing-chemically bound, capillary bound, and free water. The relative fraction of water in these three states changes during curing with some of the water evaporating away from the concrete surface.

It will be appreciated that there are no "free water" in the structure of cement and concrete mixture (right after the beginning of hardening), and certainly not in the structure of the hardened concrete. According to the fundamental definitions of the theory of drying of capillary-porous bodies, free water is the water capable of moving under the influence of gravity forces. Such behavior of water is typical for capillaries, whose size is larger than $10^{-3}$ cm. (see, A. V. Likov "Theory of drying. Moscow, "Energija", 1968, p. 472. According to T. C. Powers "Structure and Physical Properties of Hardened Portland Cement Paste". J. Amer. Ceramic Soc., 41, pp. 1-6 (Jan. 1958), the primary capillary porosity is determined by characteristic diameter of pores $(2.5-5.0) \times 10^{-4}$ cm, already at the stage of fresh-made concrete paste. This means that the water in the structure is found under the field of capillary forces from start, i.e., time zero, such that in effect there are no free water in concrete.

Furthermore, the relative water content in cement and concrete changes (decreases) primarily due to chemical bounding, and not as a result of water evaporation.

Column 1, lines 25-30 of '968, recites:

> It is known that the amount of water that ends up chemically bound is highly correlated to the compressive strength of the concrete.

It will be appreciated in this respect that there is no, and cannot be, any correlation between the amount of chemically bound water and the hardness of concrete under pressure, because, only the level of capillary-porosity structure development and its properties determine the hardness of concrete and of other similar materials, which porosity is highly correlated to physically bound water and is not at all correlated the chemically bound water.

Column 3, lines 55-60 of '968 recites:

> The present invention uses low frequency (approximately 1 MHz) NMR, which the inventors have found to provide the desired quality of spin-echo measurements.

This and similar recitations to the effect that the '968 technology uses low frequency (approximately 1 MHz) NMR appear in numerous other locations along the specification of '968, including, for example, on column 4, line 21, column 5, line 33 and column 7, line 2 and in the claims.

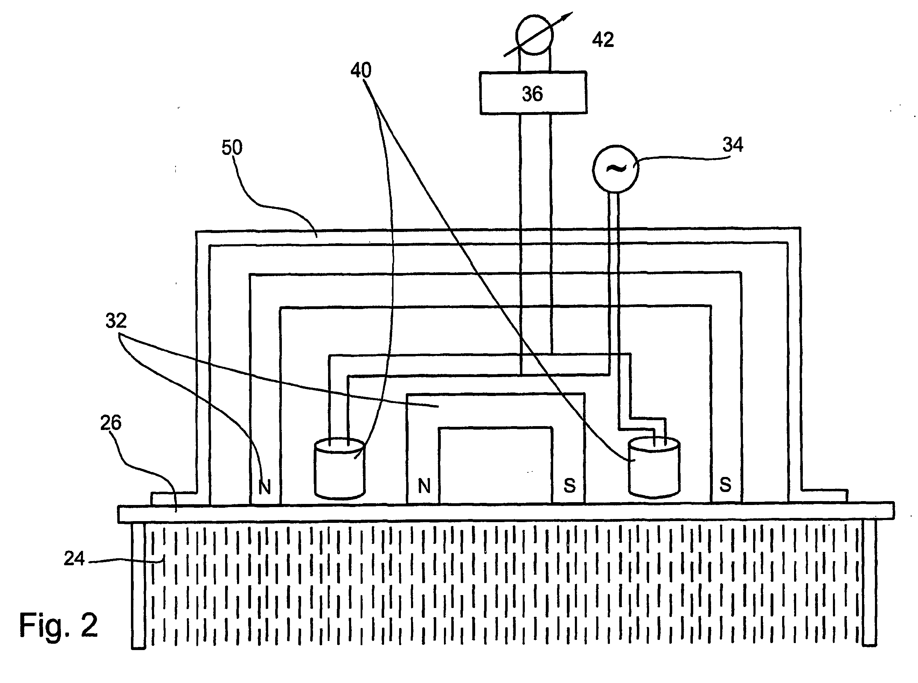

In all of these cases, the low-frequency (approximately 1 MHz) dimension of spin-echo NMR is claimed to be a distinguishing feature of the '968 technology. However, low frequency of the magnetic field is a significant disadvantage. In the experiments described in '968 (see Figures 2, 3 and 4 of '968) it is seen that the minimal possible time of $T_2$ relaxation, available for measuring, equals about 0.5 msec. Thus, more than 35 % of water contained in the concrete structure remain "invisible". These 35 %, however, are the fraction of water which are most adhered to the porous matrix and reflect its properties to the highest extent.

Column 4, lines 1-7 of '968 recites:

> The water appears in the concrete in three different stages:
>
> > a. Free water - $T_2$ relaxation time of 50- 200 ms.
> > b. Capillary bound water - $T_2$ relaxation time of 15-30 ms.
> > c. Chemically bound water - $T_2$ relaxation time less than 0.2 ms.

See to this effect also column 6, lines 49-55 of '968. However, it is known that using $T_2$ measurement the relaxation time of free water, which is at all absent from cement paste and/or concrete structures, is in the order of 3 seconds, that of physically bound water (both in cement gel pores and in larger capillaries) is in the range of 30-100

μsec, and that of chemically bound water is in the range of 10-17 μsec.

To this effect see Mendelson K. S., Halperin W. P., Jehng J-Y., Song Y-Q. "Surface magnetic relaxation in cement pastes". Magnetic Resonance Imaging, Vol. 12., No. 2, pp. 207-208, 1994; Halperin W. P, Halperin W. P., Jehng J-Y., Song Y-Q. "Application of spin-spin relaxation time measurement of surface area and pore size distribution in a hydrating cement paste". Magnetic Resonance Imaging, Vol. 12, No. 2, pp. 169-173, 1994; Lahajnar G., Blinc R., Rutar V., Smoley V., Zupancic I., Kocuvan I., Ursic J. "On the use of pulse NMR techniques for the study of cement hydration". Cement and Concrete Research, Vol. 7, pp. 385-394, 1977; Milykovic L., Lasis D., MacTavish J.C., Pintar M. M., Blinc R., Lahajnar G. "NMR studies of hydrating cement: a spin-spin relaxation study of the early hydration stages". Cement and Concrete Research, Vol. 18, pp. 951-956, 1988.

Thus, not only the definition of the various states or stages of water contained in capillary-porosity structures described in '968 is incorrect and misleading, the $T_2$ relaxation times associated with these states are erroneously wrong. This is primarily due to the fact that the low-frequency NMR measurements used in '968 do not allow measuring the whole spectrum of $T_2$ relaxation times.

It is evident from Figures 2-4 of '968 that all of the measurements therein were performed in the $T_2$ time intervals from approximately 0.5 msec to 1,300 msec. From the described distribution of water energy levels it is totally unclear what states of liquids were actually measured and which levels of liquids bonding with solid phase correspond to the peaks at values $T_2$ = 0.5-15 msec; $T_2$ = 30-50 msec; and $T_2$ > 200 msec. In other words, most of the measured $T_2$ interval, i.e., below 0.5 msec, which reflects the more tightly bound water in fine pores and capillaries was not measured, nor was it analyzed.

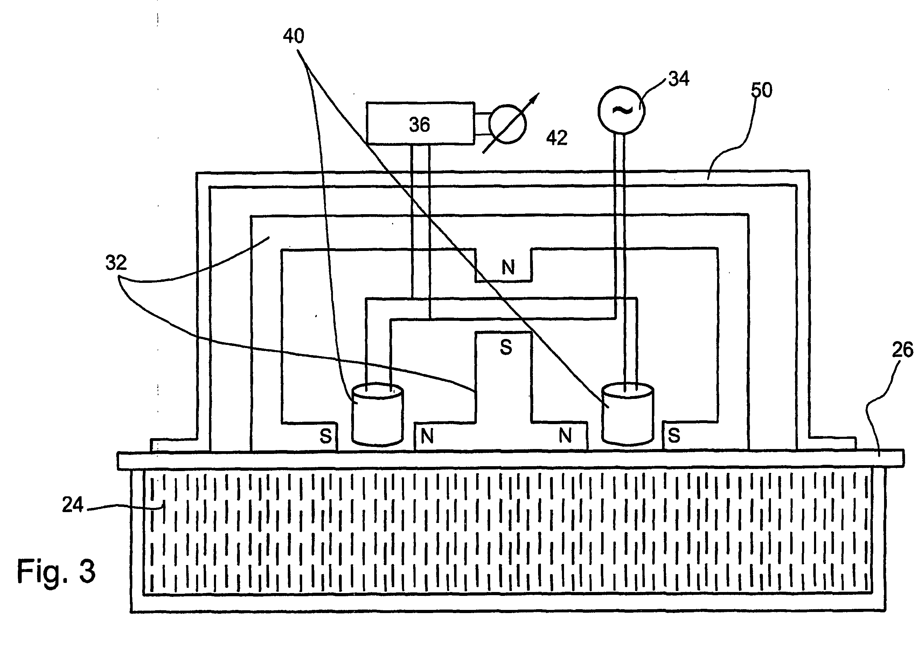

Furthermore, the amplitude peaks of maximal intensities shown in Figures 2 and 3 of '968, determining maximal quantities of the structural water, do not correspond *always* to any of the $T_2$ intervals recited in the text of '986.

Capillary (physically) bound water is determined by the authors of '968 within an extremely narrow interval of $T_2$ relaxation times, i.e., $T_2$=15-30 msec. It is known, however, that the porosity of cement stone and concrete changes in a very wide diapason from 15-100 $Å$ (gel pores) up to $10^{-4}$ cm. To this effect, see, T. C. Powers "Structure and Physical Properties of Hardened Portland Cement Paste". J. Amer. Ceramic Soc., 41, pp. 1-6 (Jan. 1958); and Neville A. M., "Properties of concrete" 3-rd Edition. Longman Scientific and Technical, N-Y, 1988). There are experimental data of $T_2$ values of physically bound water contained in various capillary-porous bodies as follows: fired-clay brick - $T_2$ = 360-620 μsec., sand-lime brick - $T_2$=1,700 μ sec, mortar - $T_2$ = 2000 μsec. To this effect, see Pel L., Kopinga K., Bertram G., Lang G. "Water absorption in fired-clay brick observed by NMR scanning". J. Phys. D.: Appl. Phys. Vol. 28, pp. 675-680, 1995; and Pel L., Kopinga K., Brocken H. "Water transport in porous building materials". HERON 41, pp. 95-105, 1996.

Thus the values $T_2$=15-30 msec recited in '968 for capillary bound water corresponds to water present in large capillaries with a characteristic size of $10^{-4}$ cm. In turn, the whole broad spectrum of water states in capillary pores is left unmonitored or determined.

Column 4, lines 13-18 of '968 recites:

Tables may be prepared for a specific type of concrete, correlating the $T_2$ distribution to a concrete property, such as strength. By comparing measurements made on a new concrete sample with the known tables, one can measure or predict the strength, or other property of the new concrete sample.

Evidently, the inventors of '968 fail to teach how to prepare tables for a specific type of concrete, correlating the $T_2$ distribution to a concrete property, such as strength.

It is principally impossible to obtain a correlation between a particular, according to its quantity, concrete property, for example, strength, and spectrogram "amplitude of NMR-time relaxation $T_2$" (Figures 2 and 3 of '968), which is only a graphic illustration of some measured distribution. Moreover, character and form of the spectrograms, measured for the concrete of the same content at the same time of its hardening by means of various NMR spectrographs can differ considerably, depending on the technical parameters of devices applied, and also depending on the specifics of processing of the measured experimental values (exponent value, etc.).

Determination and prediction of concrete properties by means of correctional dependencies is possible only by means of juxtaposition of values of the given concrete property with specific numeral parameter values, determined according to the results of NMR-measurements.

Consequently, the inventors of '968 fail to teach a skilled artisan how to predict the strength, or other properties of a new concrete sample. Indeed, no such correlations are described in '986. That and more, '986 provides no data relating to the composition of concrete used for testing and nothing is said about the changes of NMR spectrogram depending on variations of concrete content. In addition, there is no data relating to the concrete strength and evidently there is no prove that various NMR spectrograms correspond to different strength values of concretes.

Thus, '968 fails to provide data regarding (I) concrete content corresponding to experimental curves given in Figures 2, 3 and 4 of '968; (ii) concrete strength values obtained at the age of 24, 144 and 288 hours; and (iii) an example of building a correlation between the strength and results of NMR-measurements. Without this data practicing the technology described in '968 is impossible even for a most highly-qualified specialist in the field.

Column 4, lines 19-23 of '968 recites:

The present invention uses a low frequency (approximately 1 MHz), low field NMR spectrometer, such as the CoreSpec-1000, currently available from NUMALOG LTD./NUMAR CORPORATION. The CoreSpec-1000 spectrometer measures changes in the $T_2$ distribution at two different temperatures, which can be used to determine the diffusion coefficient of the concrete mixture. The diffusion coeffcient and the influence of temperature on the stage change of the water improve the accuracy of measuring and predicting concrete properties.

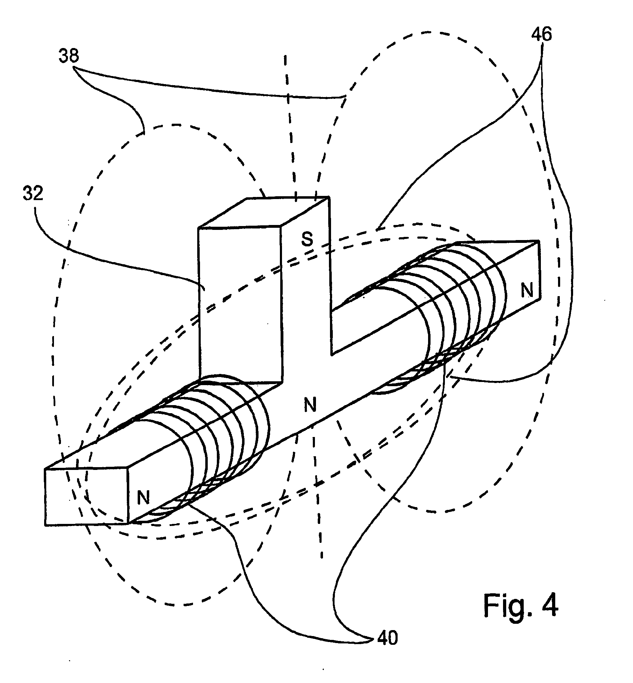

The fact that the measured water content constitutes only about 65 % (see Figure 4 of '968) of the real content thereof directly results due to the insufficient resolving power of the device CoreSpec-1000 which was employed. This device, which was originally developed for handling geophysical problems (search for oil in the ground, etc.), does not allow to measure low relaxation times, $T_2 < 300$ msec, thus, about 35 % of water remains "invisible". Consequently, the CoreSpec-1000 device is completely inapplicable for analysis of finely-dispersed capillary-porous systems such as cement stone and concrete.

There is, thus, still a widely recognized need for, and it would be highly advantageous to have, an operable and improved apparatus and method for measuring a compressive strength of capillary-porous chemically active materials while hardening, devoid of the limitations of the prior art.

Additional known methods of measuring parameters of porous material such as concrete are disclosed in Bhattacharja S et al, Advanced Cement Based Materials, Vo. 1, pp 67-76 (1993).

In Saadatmanesh H et al, Nondestr. Test. Eval., Vol. 12, pp 133-153 (1995), there is described a method of measuring a compressive strength of a capillary-porous chemically active material while hardening according to the preamble of claim 1. An apparatus for measuring a compressive strength of a capillary-porous chemically active material while hardening according to the preamble of claim 10 is also known from the above Saadatmenesh H et al. document.

Therefore, it is a primary objective of the present invention to provide a method and apparatus which overcomes the aforementioned inadequacies of the prior art.

This object is achieved by a method of measuring a compressive strength of a capillary-porous chemically active material according to claim 1 and an apparatus according to claim 10.

Preferred embodiments are defined in the dependent claims.

BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

FIG. 1 is a simplified cross sectional view of an apparatus for measuring a property of a structure made of a capillary-porous chemically active material according to one embodiment of the present invention;

FIG. 2 is a simplified cross sectional view of an apparatus for measuring a property of a structure made of a capillary-porous chemically active material according to another embodiment of the present invention;

FIG. 3 is a simplified cross sectional view of an apparatus for measuring a property of a structure made of a capillary-porous chemically active material according to still another embodiment of the present invention;

FIG. 4 is a simplified perspective view of a "T"-type magnet and a radio frequency coil placed therein, which are employed with the apparatus for measuring a property of a structure made of a capillary-porous chemically active material according to still another embodiment of the present invention;

FIG. 5 shows plots demonstrating a linear relationship between amplitudes of spectral curves and water quantity in concrete;

FIG. 6 shows a commutative plot demonstrating the physically bound water content, as determined by $T_2$ relaxation time, at various stages of concrete hardening;

FIG. 7 show plots demonstrating water content during hardening of concrete;

FIG. 8 shows a plot demonstrating a correlation between compressive strength of concrete and relative values of energy absorption in the RF-field;

FIG. 9 shows a plot demonstrating the determination of setting start point of cement according to results of measurements of a "short" exponent $T_2$ relaxation time; and

FIG. 10 shows a plot demonstrating the determination of setting finish point of cement according to results of measurements of a "long" exponent $T_2$ relaxation time.

DESCRIPTION OF THE PREFERRED EMBODIMENTS

The present invention is directed to methods and apparatus which can be used for measuring and predicting a compressive strength of capillary-porous chemically active materials while hardening. Specifically, the present invention can be used for predicting the final formation strength of capillary-porous chemically active materials while hardening. Most specifically, the present invention can be used for non-destructive control and forecasting of concrete strength.

The principles and operation of a method and apparatus according to the present invention may be better understood with reference to the drawings and accompanying descriptions.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

According to a preferred embodiment of the present invention, strength determination of concrete or other chemically-active capillary-porous materials is performed as follows:

At any particular time point during hardening of concrete, a high frequency, e.g. at least 7 MHz, spin- echo NMR measurement is performed.

Based on the obtained NMR spectrogram, the quantity of physically-bound water (at substantially all energy levels) and the overall energy of such water are determined.

Concrete strength is thereafter determined based on a predetermined relationship between strength and results of high frequency (e.g., at least 7 MHz) spin echo NMR-measurements.

According to a preferred embodiment of the present invention, the predicted strength of concrete or of any other capillary-porous chemically active material undergoing a process of hardening is determined while executing the following steps:

A first high frequency (at least 7 MHz) spin echo NMR measurement is performed and the energy of physically bound water at the moment of setting start (Ea) of cement or concrete is determined in accordance with ASTM C-191 "Standard Test Method for Time of Setting of hydraulic cement by Vicat Needle".

A second high frequency (at least 7 MHz) spin echo NMR measurement is performed and the energy of physically bound water at the moment of setting finish (Ei) of cement or concrete is determined in accordance with ASTM C-191.

On the basis of these NMR measurements, which are performed at times of setting start and setting finish, a relation Ea/Ei of RF-field absorption of energy of physically bound water is determined.

In accordance with a preferred embodiment of the present invention, a compressive strength of concrete, is determined based on a predetermined relationship between said compressive strength and the corresponding energy relation Ea/Ei of the physically-bound water.

The high frequency (e.g., at least 7 MHz), spin-echo NMR method according to the present invention makes use of water found in the concrete.

Thus, the present invention provides a method of determining concrete strength on concrete samples in situ using nuclear magnetic resonance (NMR). An analysis of concrete performed in accordance with the method of the present invention takes a few hours instead of the 28 days of the prior art, thus providing reliable and quick information to the builder and virtually eliminating any financial risk.

The embodiments and examples of the present invention are described herein mostly with reference to the curing of concrete. However, it is appreciated that the present invention is applicable not only to curing of concrete, but to any capillary-porous chemically active material which contains a liquid which undergoes metamorphosis during hardening, and in which a spin-echo NMR measurement may be made of the different stages of the liquid while hardening.

The present invention uses high frequency (approximately at least 7 MHz) NMR, which provides the desired quality of spin-echo measurements and can detect $T_2$ relaxation times of most, say at least 85 %, preferably at least 90 %, more preferably, at least 95 %, most preferably, substantially all (e.g., 98-100 %) of the physically bound water and optionally the chemically bound water in curing concrete.

The present invention makes use of the NMR spin-echo method to analyze the concrete. By analyzing the NMR signal from a fresh mixture of concrete by means of the $T_2$ relaxation time distribution, one can estimate the compressive strength of the final cured concrete by measuring the metamorphosis of the water that is trapped in the concrete mixture as a function of time.

As already stated in the Background section above, the water appears in concrete in two different stages (i) physically bound water, a portion thereof is contained in the pores (less than $10^{-3}$ $\mu$m in diameter) of the formed cement gel and having a bond energy of up to 50 kDz/mol and $T_2$ relaxation time of about 50-100 $\mu$sec, whereas another portion thereof occupies capillaries of a larger diameter ($10^{-2}$-$10^{-1}$ $\mu$m) with bond energy of up to 10-20 kDz/mol and $T_2$ relaxation time of 100-300 $\mu$sec; and (ii) chemically bound water which transforms into a solid state with bond energy in the order of 1000 kDz/mol and $T_2$ relaxation time of about 10-17 $\mu$sec.

Thin films of surface moisture having a thickness of 1-2 molecular layers (about $(3-6)x10^{-4}$ $\mu$m) constitute a specific part of the physically-bound water. This water has anomalous properties as is compared to a body of water: density of approximately 1.1 g/cm$^3$, viscosity in the order 10 cantiStock (cSt), and it is removable from the surface at temperatures around 250-300 °C.

It is also known that relaxation time of this water fraction is $T_2$ = 30-40 $\mu$sec (see Mendelson K.S., Halperin W.P., Jyn-Yuar Jehng, Yi-Qiao Song. Surface magnetic relaxation in cement pastes. Magnetic Resonance Imaging, vol. 12, No. 2, pp. 207-208, 1994).

This water fraction gives the most interesting information regarding the structure development of the hardening chemically-active capillary-porous material. Growth in quantity of this water is directly related to the formation of new interior surfaces of a developing structure.

The formation of new surfaces, their quantity in units of material, their volume, and the following relation directly determine the increase in strength. Thus, knowing the quantity of this water fraction and on the basis of predetermined relationship between the results of NMR-measurements and strength, it is possible to determine concrete strength at any state.

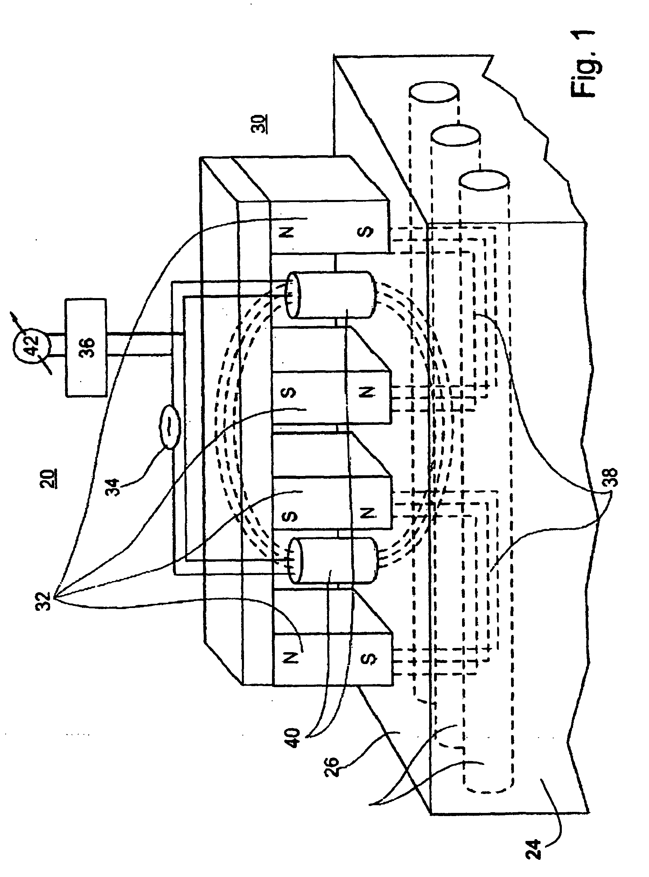

Figures 1-4 illustrate several embodiments of an apparatus according to the present invention, which is referred to hereinbelow as apparatus **20** and which can be used to effect the methods according to the present invention.

Apparatus **20** according to the present invention thus serves for measuring a property of a structure made of capillary-porous chemically active material **24** which has a surface **26** and which includes therein physically bound water and chemically bound water. The structure may additionally include a steel armature.

Apparatus **20** includes a pulsed nuclear magnetic resonance generator **30**. Generator **30** serves for generating a sensitive volume in concrete structure for performing therein an *in situ,* high frequency (e.g., at least 7 MHz), spin-echo nuclear magnetic resonance measurement of at least the physically bound water present in a capillary-porous chemically active material **24** while hardening.

According to preferred embodiments of the present invention, pulsed nuclear magnetic resonance generator **30** includes, in an operative arrangement, a static magnetic field generator **32,** a radio frequency electromagnetic field generator **34** and a nuclear magnetic resonance receiver **36**.

Static magnetic field generator **32** serves for generating a static magnetic field **38** within the sensitive volume of structure.

In the configuration of Figures 1-3, two magnets are shown, whereas in that of Figure 4, a single magnet is shown.

Magnet(s) **32** are so designed such that static magnetic field lines of the static magnetic field are disposed close and substantially perpendicular to surface **26**.

In the configurations of Figures 1-2, at least one of magnet **32** is a horseshoe magnet having its opening disposed against surface **26**. In Figure 1, two horseshoe magnets **32** are employed, arranged side by side. In Figure 2, two horseshoe magnets are employed, the smaller thereof is disposed between the poles of the larger one. As shown in Figure 3, according to another preferred embodiment, one of magnets **32** has a butterfly-type cross section, whereas another has an upside-down "T"-bar cross section. As shown in Figure 4, a single magnet which has an upside-down "T"-bar cross section can be employed. Other configurations are also envisaged.

-Radio frequency electromagnetic field generator **34** serves for generating a radio frequency electromagnetic field. Radio frequency electromagnetic field generator **34** thus includes at least one radio frequency coil **40.** In the configurations of Figure 1-4, two coils **40** are shown.

Coil(s) **40** are so designed such that electromagnetic field lines of radio frequency electromagnetic field are disposed substantially parallel to surface **26**.

In the embodiments shown in Figures 1-3 coil(s) **40** are disposed between the poles of magnet(s) **32**.

Nuclear magnetic resonance receiver **36** serves for receiving nuclear magnetic resonance signals from excitable nuclei in capillary-porous chemically active material **24** and for providing an output indicative of the compressive strength of capillary-porous chemically materials **24** via data processing, as indicated by box **42**.

A radio frequency shield **50** (Figure 2) is preferably employed to substantially isolate the high frequency, spin-echo nuclear magnetic resonance measurement from environmental noise. Shield **50** preferably also serves as a housing which houses other components of apparatus **20**.

Additional objects, advantages, and novel features of the present invention will become apparent to one ordinarily skilled in the art upon examination of the following example, which is not intended to be limiting. Additionally, each of the various embodiments and aspects of the present invention as delineated hereinabove and as claimed in the claims section below finds experimental support in the following example.

**EXAMPLE**

Thus, reference is now made to the following example, which together with the above descriptions, illustrate the invention in a non limiting fashion.

According to the present invention, high frequency (e.g., at least 7 MHz), spin-echo nuclear magnetic resonance (NMR) is used to control and/or monitor the structural solidity of cement stone, concrete and other capillary-porous chemically active materials.

As shown herein, high frequency (e.g., at least 7 MHz), spin-echo nuclear magnetic resonance (NMR) allows to unambiguously determine the distribution on physically bound water in the structure according to water energy levels, characterized by corresponding values of $T_2$ relaxation times while hardening.

The implementation of the high frequency (e.g., at least 7 MHz), spin-echo nuclear magnetic resonance (NMR) method according to the present invention is feasible due to existence of the following (i) linear relation between the quantity of physically bound water in a concrete structure and the amplitude of NMR measurement generated by this water; and (ii) functional dependency between the energy state of water, as determined by-the overall energy E of absorption of the RF field and the $T_2$ relaxation time. This dependency, according to A. Abraham (Principles of Nuclear Magnetism, Oxford, Clarendon Press, 1996), is:

$$E = \frac{\hbar}{4kT}\omega^2 \cdot \gamma^2 \cdot H_1^2 \cdot N \cdot T_2 \qquad (3)$$

where $h$ equals $6.63 \cdot 10^{-34}$ J/sec (Plank's constant); $\omega_0 \approx \omega_1$ are the Larmor frequency and the rotating RF-field frequency, accordingly; $\gamma$ is a gyroscopic relation; $H_1$ is the tenseness of the magnetic field of the inner-spinning magnet; k equals $1.38 \cdot 10^{-23}$ J/°K (Boltsman's constant); and $T$ is the temperatme (°K).

Since all of the parameters in equation (3), except for the quantity of protons, $N$, of the $T_2$ relaxation time, $T_2$, are either general constants or constants characterizing the device, then equation (3) can be written as:

$$E = const \cdot N \cdot T_2 \qquad (4)$$

where

$$constant = \frac{\hbar^2}{4kT}\omega^2 \cdot \gamma^2 \cdot H_1^2 \qquad (5)$$

In subsequent calculations the following values were employed: $\omega = 6.28 \cdot 10^7$ sec-1; $\gamma = 335.52$ sec$^{-1}$ m.A$^{-1}$ ($2.67 \cdot 10^4$ sec$^{-1}$ ersted$^{-1}$); $H_1 = 10^5/4\pi$ A.m$^{-1}$ ($10^2$ ersted). These values allow to determine the overall energy of absorption of the RF-field in a time unit as:

$$E = 7.64 \cdot 10^{-19} \cdot N \cdot T_2 \; (J/sec) \quad (6)$$

Since 1 mol of $H_2O$ contains $1.2 \cdot 10^{21}$ protons, then, while measuring the $T_2$ relaxation time according to equation (6), it is always possible to calculate the overall energy of absorption of the RF-field for all of the mass of the physically-bound water, found in the analyzed structure.

The method of measuring the strength of concrete and other capillary-porous chemically active materials according to the present invention was realized in practice on samples of standard cement-sand (C:S) mixture, manufactured and conventionally tested in accordance with the European Standard EN 196-1987, Part 1: Methods of testing cement. Determination of strength.

To determine concrete's strength, a series of sample-beams of a standard size (40 x 40 x 160 mm) and content (C:S = 1:3 with water-cement ratio W/C = 0.5) were manufactured. An overall quantity of 10 series, 3 samples in each series, were manufactured. The standard samples were produced using a cement marked "250" of 2 Israeli cement plants: Ramla and Har-Tuv (Nesher company). Compression strengths were determined at days 1 (in addition to the requirements of standard EN 196), 3 and 28.

During preparation of each standard sample (water:cement:sand ratio of 3.33:6.66:20, respectively), 30 gram samples of each were collected and placed into the working volume of an NMR-analyzer - "Minispec mq 10" product of Bruker company having a working frequency of 10 MHz.

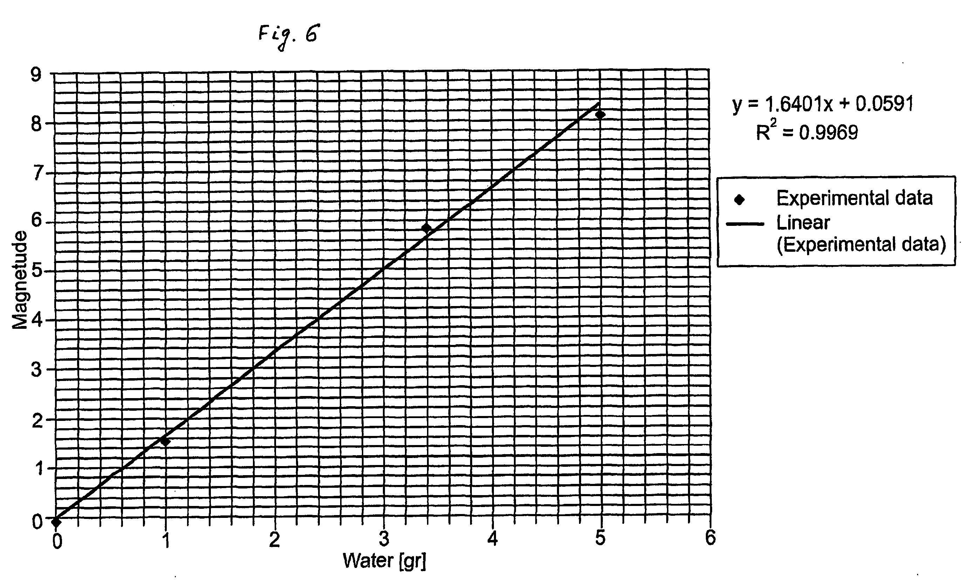

NMR-measurements of T2 relaxation time and masses of physically-bound water were performed at 2 (see, ASTM C-191 "Standard Test Method for Time of Setting of Hydraulic Cement by Vicat Needle"), 24, 72 and 672 hours. As an example, Figure 6 presents the results obtained for concrete manufactured based on cement derived from the plant in Ramla.

It is evident that the NMR device employed allows to measure rather short $T_2$ relaxation times, $T_2$= 40-50 $\mu$sec, which allows "to see" practically all of the physically-bound water in the analyzed structure.

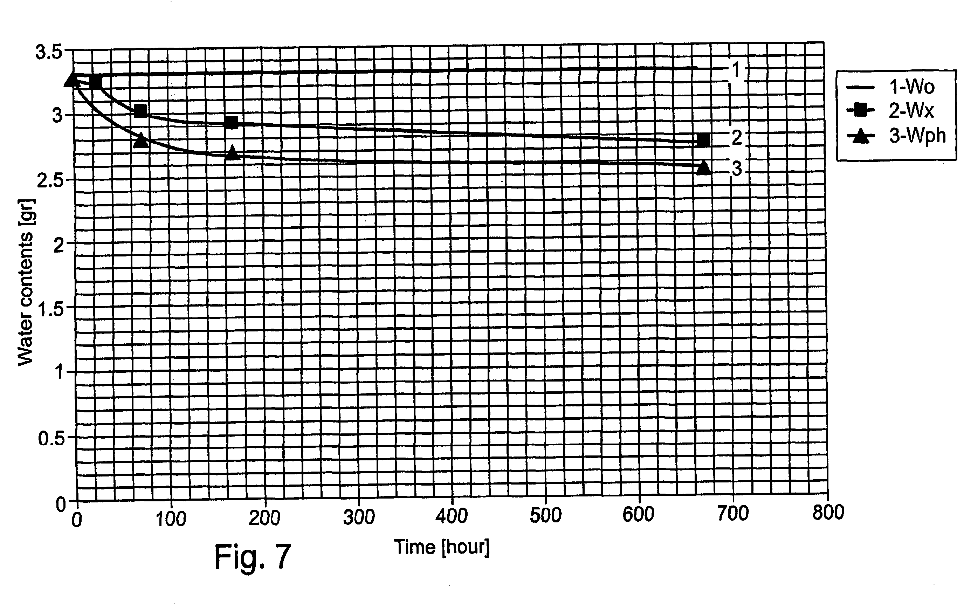

Figure 7 presents the changes in water masses during the process of hardening of the standard cement-sand mixtures, taking into account the mass of chemically-bound water (Wx).

Since at any moment the overall quantity of water mass (Wo) equals Wx + Wph (wherein, Wph is the mass of physically-bound water, determined by means of NMR-measurements), then, on the basis of the data obtained it follows that not more than 5-7 % of the physically-bound water is left "invisible" to the analysis performed.

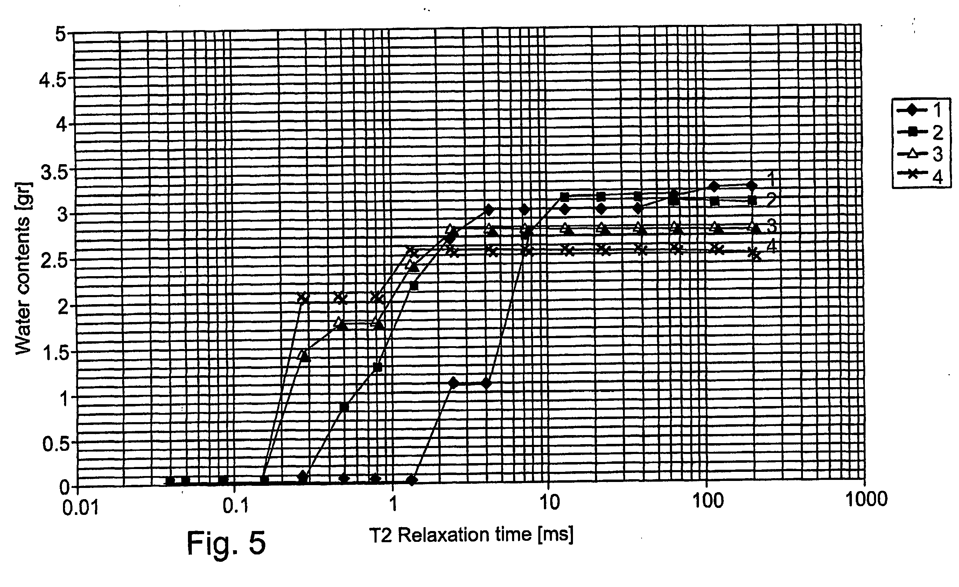

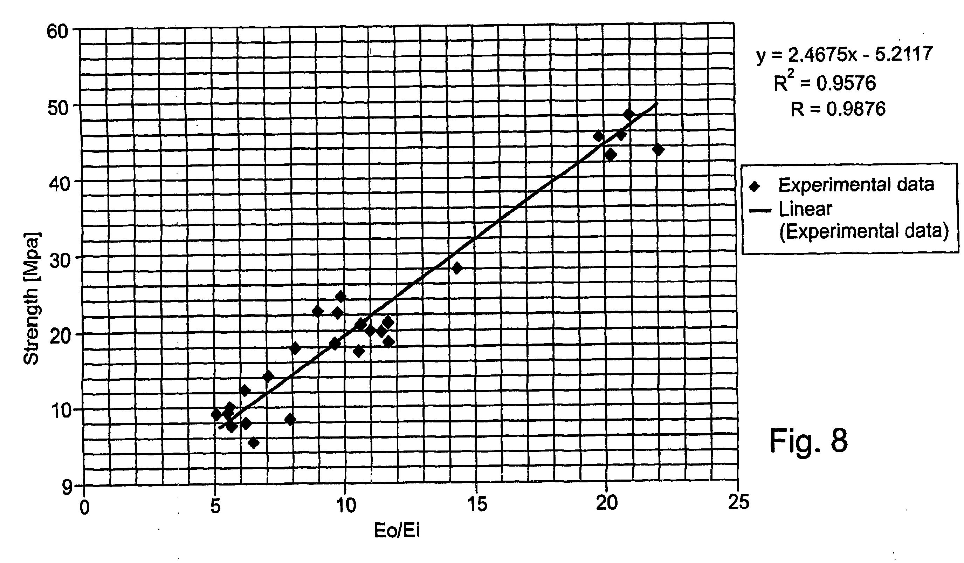

The absorption energy of the RF-field is determined on the basis of the data presented in figures 5 and 6, by means of equations (3)-(6). As is shown in Figure 8, the obtained energy values, E, were compared with independently determined standard values of compression strength R (MPa). This comparison revealed a high correlation coefficient (0,9876).

When building the dependencies R = f(E), instead of absolute value of absorption energy, *E*, of the physically-bound water, the relative value $E_0/E_i$ (figure 8) was employed, where Eo is the value of absorption energy of the RF-field, measured at setting start; whereas Ei is the value of absorption energy, measured at setting finish.

The principle advantages of this method is the possibility to measure the relaxation time (and, consequently, energy) continuously during the whole process of hardening or at any of its stages with maximal accuracy of the results obtained, in comparison to other methods.

During the hardening process of cement, concrete and similar capillary-porous chemically active materials, redistribution of physically bound water content, its transformation into a state characterized by higher level of interaction with the solid phase continuously occurs. Since at any moment of time, $t_{(i)}$, the energy state of the water stage is determined by the spectrum of relaxation times, $T_{2(i)}$, then on every spectrogram it is possible to select several signal packets - spectra with particular relaxation times; each spectrum corresponds to a particular quantity of water content, having a level energy *E*.

The general energy balance at time *t* is determined by:

$$\underline{E\,R(tj)} = \sum_{i=1}^{i=n} N_i T_{2(i)} \qquad (7)$$

$$E(i) = const \cdot \Sigma\, N_i \cdot T_2(i) \qquad (8)$$

where i is the number of typical power states of the physically bound water, and which is determined by changes in the $T_2$ relaxation time.

As is shown in Figure 6, in this case, the value of i changes from 4 at the beginning of the hardening process to 2 following 28 days of hardening.

In performing measurements by high frequency (e.g., at least 7 MHz), spin-echo nuclear magnetic resonance (NMR) according to the present invention at any stage of the hardening process, the relaxation curve-amplitude of the *A* signal of NMR as a function of the real time, *t*, is obtained. As a result of mathematical processing of the relaxation curve, the spectrum of $T_2$ relaxation times, that is the set of amplitudes of signals $A_i$ for each relaxation time $T_{2(i)}$ is:

$$A(t) = \sum_{i=1}^{i=n} A_i e^{(t/T_{2(i)})}$$

(9)

While processing the experimental curves of spectra of the $T_2$ relaxation times and in order to increase accuracy of obtained results, $i$ =16 was used. In the most simple case the exponent in equation (9) is i=2, wherein the first exponent, i.e., i=1, is "short", whereas, the second exponent, i.e., i=2, is "long". As a result, the "short" exponent defines the physically bound water having strong interactions with the cement structure, whereas, the "long" exponent defines the physically bound water having weaker interactions therewith.

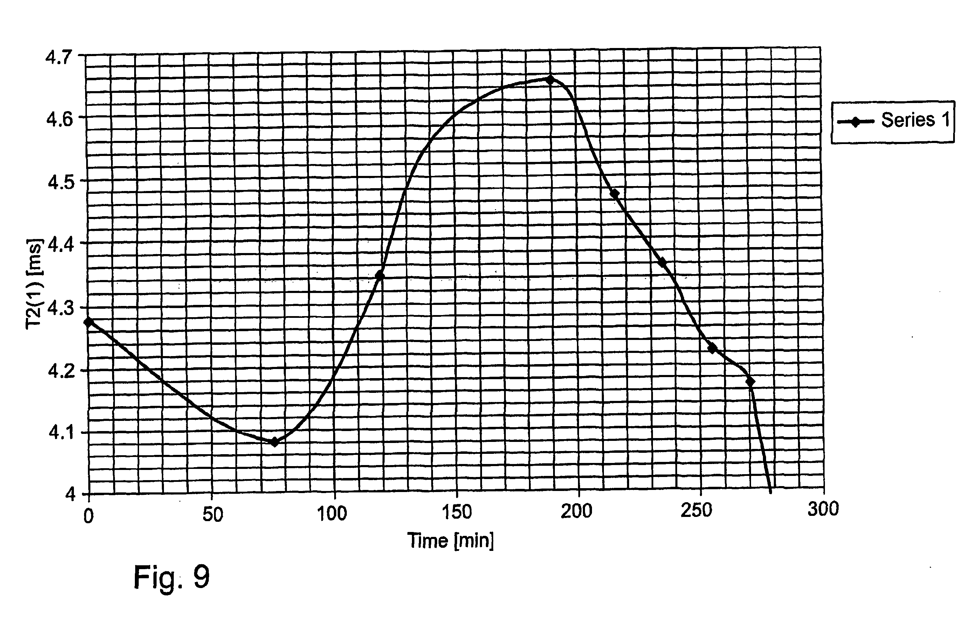

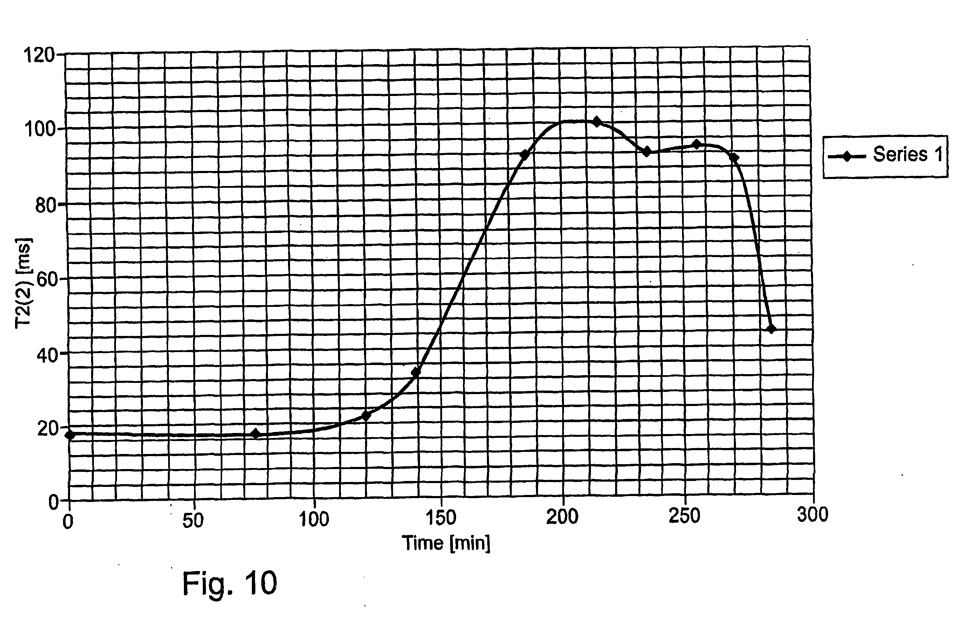

Figures 9 and 10 present curves of "short" and "long" exponent measured at the starting stage of hardening of the standard cement-sand mixtures. It is obvious, that the obtained curves are characterized by local minima and/or maxima, which enable one to correlate such curves with the setting times of cement. It will be appreciated that the first maximum of the curve representing the first or "short" exponent (Figure 9) defines the setting start time. it will further be appreciated that the point of dramatic decline in the second or "long" exponent (Figure 10) defines the setting finish time.

After the determination of the corresponding value of strength Rj at every time tj, the correlation dependency "strength-energy" is obtained. Since the energy is a fundamental parameter of the substance state, then the dependency R = f(E) is universal and can be applied for the determination of the strength of cement and concrete of different contents $T_2$ at the various stages of hardening.

Although the invention has been described in conjunction with specific embodiments thereof, it is evident that many alternatives, modifications and variations will be apparent to those skilled in the art.

**Claims**

1. A method of measuring a compressive strength of a capillary-porous chemically active material (24) while hardening, the capillary-porous chemically active material including therein water which undergoes stage metamorphosis by interacting with a solid phase of the material (24), the water including a physically bound water portion which includes water in gel pores being **characterized by** a T2 relaxation time of about 30-100 microseconds and water in larger capillaries of the material being **characterized by** a T2 relaxation time of about 100-300 microseconds, the method comprising the steps of

   A) performing a high frequency spin echo nuclear magnetic resonance measurement of at least said physically bound water portion,
   B) calculating a T2 distribution of said physically bound water portion from said high frequency spin echo nuclear magnetic resonance measurement,
   the method being **characterized in that**
   C) the frequency of the high frequency spin echo nuclear magnetic resonance measurement is being chosen between 7 MHz and 20 MHz,
   D) the method comprises detecting the T2 distribution of the physically bound water fraction having a T2 relaxation time of 30-40 microseconds, the method further comprising the steps of
   E) calculating the amount of RF field energy absorbed by said physically bound water portion including said physically bound water fraction, using a functional relation between said absorption energy and said T2 distribution,
   F) determining the compressive strength of said capillary-porous chemically active material (24) using a relationship between said compressive strength and said amount of RF field energy absorbed by said physically bound water portion including said physically bound water fraction.

2. The method of claim 1, **characterized in that** said measurement is performed at least at setting start point and at setting finish point; and
   said compressive strength is determined at various stages of hardening of the material (24), based on said relationship.

3. The method of claim 1, wherein said material (24) is a structure made of concrete, the concrete including therein said physically bound water and chemically bound water, **characterized in that** said step of performing said spin-echo nuclear magnetic resonance measurement is performed in situ.

4. The method of claims 1 or 3, **characterized in that** said compressive strength is determined at various stages of hardening of the material (24), based on said relationship.

5. The method of claim 1, wherein said capillary-porous chemically active material (24) further includes a chemically bound water portion having a T2 relaxation time of 10-17 microseconds, wherein said spin-echo nuclear magnetic resonance measurement of the material (24) is performed such as to detect T2 relaxation times of said physically bound water portion and said chemically bound water portion.

6. The method of claim 1, wherein said capillary-porous chemically active material (24) further includes a chemically bound water portion having a T2 relaxation time of 10-17 microseconds, whereby said step of performing said spin-echo nuclear magnetic resonance measurements is performed at least at setting start point and at setting finish point; and
said compressive strength is determined at various stages of hardening of the material (24), based on said relationship.

7. The method of claim 1, wherein said material (24) is a structure made of concrete, the concrete including therein said physically bound water and a chemically bound water portion having a T2 relaxation time of 10-17 microseconds, the method comprising performing said spin-echo nuclear magnetic resonance measurement in situ.

8. The method of any of claims 1-8, **characterized in that** a radio frequency shield (50) is employed to substantially isolate said spin-echo nuclear magnetic resonance measurement from environmental noise.

9. An apparatus suitable for measuring a compressive strength of a structure made of a capillary-porous chemically active material (24) while hardening, the capillary-porous chemically active material (24) including therein physically bound water and chemically bound water, the physically bound water including water in gel pores and in larger capillaries of the material,
the apparatus comprising a pulsed nuclear magnetic resonance generator (30) for generating a sensitive volume in said structure for performing therein an in situ, high frequency, spin-echo nuclear magnetic resonance measurement of at least said physically bound water in the capillary-porous chemically active material (24) while hardening, said pulsed nuclear magnetic resonance generator (30) including in an operative arrangement:

(a) an inside-out static magnetic field generator (32) adapted to generate a static magnetic field (30) within said sensitive volume, said static magnetic field generator (32) including at least one magnet (32);
(b) a radio frequency electromagnetic field generator (34) adapted to generate a radio frequency electromagnetic field, said radio frequency electromagnetic field generator (34) including at least one radio frequency coil (40) so designed such that, in said sensitive volume, the electromagnetic field lines of said radio frequency electromagnetic field are perpendicular to the electromagnetic field lines (38) of said static magnetic field (30) ; and
(c) a nuclear magnetic resonance receiver (36) adapted to receive nuclear magnetic resonance signals from excitable nuclei in said capillary-porous chemically active material (24), said receiver being connected to data processing means (42) providing an output indicative of the compressive strength of the capillary-porous chemically active material (24) the apparatus being arranged to carry out step B) as defined in claim 1, the apparatus being **characterized in that** it is further arranged to carry out steps C) to F) as defined in claim 1.

10. The apparatus of claim 9, **characterized in that** each of said at least one radio frequency-coil (40) is shaped as a frustum having a smaller base and a wider top.

11. The apparatus of claim 9, **characterized in that** said at least one magnet (32) includes a horseshoe magnet.

12. The apparatus of claim 9, **characterized in that** said at least one magnet (32) includes one larger and one smaller horseshoe magnets, such that said smaller horseshoe magnet is disposed between the poles of said larger horseshoe magnet (32).

13. The apparatus of claim 9, **characterized in that** said at least one magnet includes an upside-down "T"-bar magnet.

14. The apparatus of claim 9, **characterized in that** said at least one magnet (32) includes two horseshoe magnets (32), arranged side by side.

**Patentansprüche**

1. Ein Verfahren zum Messen einer Druckfestigkeit eines kapillarporösen chemisch aktiven Materials (24) während des Aushärtens, wobei das kapillarporöse chemisch aktive Material darin Wasser enthält, das eine Zustandsänderung erfährt, indem es mit einer Feststoffphase des Materials (24) reagiert, wobei das Wasser einen physikalisch gebundenen Wasseranteil umfasst, der Wasser in Gelporen, das durch eine T2-Relaxationszeit von etwa 30-100 Mikrosekunden **gekennzeichnet** ist, und Wasser in größeren Kapillaren des Materials, das durch eine T2-Relaxationszeit von etwa 100-300 Mikrosekunden **gekennzeichnet** ist, beinhaltet, wobei das Verfahren die Schritte umfasst des

   A) Durchführens einer Hochfrequenz-Spinecho-Kernresonanzmessung zumindest besagten physikalisch gebundenen Wasseranteils,
   B) Berechnens einer T2-Verteilung besagten physikalisch gebundenen Wasseranteils aus besagter Hochfrequenz-Spinecho-Kernresonanzmessung,
   wobei das Verfahren **dadurch gekennzeichnet ist, dass**
   C) die Frequenz der Hochfrequenz-Spinecho-Kernresonanzmessung zwischen 7 MHz und 20 MHz gewählt ist,
   D) das Verfahren das Nachweisen der T2-Verteilung der physikalisch gebundenen Wasserfraktion mit einer T2-Relaxationszeit von 30-40 Mikrosekunden umfasst, wobei das Verfahren weiter die Schritte umfasst des
   E) Berechnens der von durch besagten physikalisch gebundenen Wasseranteil, einschließlich besagter physikalisch gebundener Wasserfraktion, absorbierten Menge an HF-Feldenergie, unter Verwendung einer funktionellen Beziehung zwischen besagter Absorptionsenergie und besagter T2-Verteilung,
   F) Ermittelns der Druckfestigkeit besagten kapillarporösen chemisch aktiven Materials (24) unter Verwendung einer Beziehung zwischen besagter Druckfestigkeit und besagter, von besagtem physikalisch gebundenem Wasseranteil einschließlich besagter physikalisch gebundener Wasserfraktion absorbierter besagter Menge an HF-Feldenergie.

2. Das Verfahren von Anspruch 1, **dadurch gekennzeichnet, dass** besagte Messung zumindest am Anfangspunkt des Abbindens und am Endpunkt des Abbindens durchgeführt wird; und besagte Druckfestigkeit in verschiedenen Stadien der Aushärtung des Materials (24) auf Basis besagter Beziehung ermittelt wird.

3. Das Verfahren von Anspruch 1, wobei besagtes Material (24) eine aus Beton hergestellte Struktur ist, wobei der Beton darin besagtes physikalisch gebundenes Wasser und chemisch gebundenes Wasser umfasst, **dadurch gekennzeichnet, dass** besagter Schritt der Durchführung besagter Spinecho-Kernresonanzmessung vor Ort durchgeführt wird.

4. Das Verfahren der Ansprüche 1 oder 3, **dadurch gekennzeichnet, dass** besagte Druckfestigkeit in verschiedenen Stadien der Aushärtung des Materials (24) auf Basis besagter Beziehung ermittelt wird.

5. Das Verfahren von Anspruch 1, wobei besagtes kapillarporöses chemisch aktives Material (24) weiter einen chemisch gebundenen Wasseranteil mit einer T2-Relaxationszeit von 10-17 Mikrosekunden beinhaltet, wobei besagte Spinecho-Kernresonanzmessung des Materials (24) durchgeführt wird, um T2-Relaxationszeiten besagten physikalisch gebundenen Wasseranteils und besagten chemisch gebundenen Wasseranteils nachzuweisen.

6. Das Verfahren von Anspruch 1, wobei besagtes kapillarporöses chemisch aktives Material (24) weiter einen chemisch gebundenen Wasseranteil mit einer T2-Relaxationszeit von 10-17 Mikrosekunden beinhaltet, wobei besagter Schritt der Durchführung besagter Spinecho-Kernresonanzmessungen zumindest am Anfangspunkt des Abbindens und am Endpunkt des Abbindens durchgeführt wird; und besagte Druckfestigkeit in verschiedenen Stadien der Aushärtung des Materials (24) auf Basis besagter Beziehung ermittelt wird.

7. Das Verfahren von Anspruch 1, wobei besagtes Material (24) eine aus Beton hergestellte Struktur ist, wobei der Beton darin besagtes physikalisch gebundenes Wasser und einen chemisch gebundenen Wasseranteil mit einer T2-Relaxationszeit von 10-17 Mikrosekunden umfasst, wobei das Verfahren die Durchführung besagter Spinecho-Kernresonanzmessung vor Ort umfasst.

8. Das Verfahren von einem der Ansprüche 1-8, **dadurch gekennzeichnet, dass** eine Hochfrequenzabschirmung (50) eingesetzt wird, um besagte Spinecho-Kernresonanzmessung im Wesentlichen vor umgebungsbedingtem Rauschen zu schützen.

9.  Eine Einrichtung, die zur Messung einer Druckfestigkeit einer aus einem kapillarporösen chemisch aktiven Material (24) hergestellten Struktur während des Aushärtens geeignet ist, wobei das kapillarporöse chemisch aktive Material (24) darin physikalisch gebundenes Wasser und chemisch gebundenes Wasser beinhaltet, wobei das physikalisch gebundene Wasser Wasser in Gelporen und in größeren Kapillaren des Materials beinhaltet,

    wobei die Einrichtung einen gepulsten Kernresonanzgenerator (30) zur Erzeugung eines empfindlichen Volumens in besagter Struktur umfasst, um darin eine Vor-Ort-Hochfrequenz-Spinecho-Kernresonanzmessung zumindest besagten physikalisch gebundenen Wassers in dem kapillarporösen chemisch aktiven Material (24) während des Aushärtens durchzuführen,

    wobei besagter gepulster Kernesonanzgenerator (30) in einer wirksamen Anordnung folgendes umfasst:

    (a) einen von innen nach außen wirkenden statischen Magnetfeldgenerator (32), der zum Generieren eines statischen Magnetfelds (30) innerhalb besagten empfindlichen Volumens eingerichtet ist, wobei besagter statischer Magnetfeldgenerator (32) zumindest einen Magneten (32) umfasst;

    (b) einen Hochfrequenz-Elektromagnetfeldgenerator (34), der zum Generieren eines Hochfrequenz-Elektromagnetfelds eingerichtet ist, wobei besagter Hochfrequenz-Elektromagnetfeldgenerator (34) zumindest eine Hochfrequenzspule (40) umfasst, welche so gestaltet ist, dass in besagtem empfindlichen Volumen die elektromagnetischen Feldlinien besagten Hochfrequenz-Elektromagnetfelds senkrecht zu den elektromagnetischen Feldlinien (38) besagten statischen Magnetfelds (30) verlaufen; und

    (c) einen Kernresonanzempfänger (36), der zum Empfangen von Kernresonanzsignalen von erregbaren Nuklei in besagtem kapillarporösen chemisch aktiven Material (24) eingerichtet ist, wobei besagter Empfänger an Datenverarbeitungsmittel (42) angeschlossen ist, die Ausgabedaten verschaffen, welche die Druckfestigkeit des kapillarporösen chemisch aktiven Materials (24) anzeigen, wobei die Einrichtung zur Durchführung von Schritt B), wie in Anspruch 1 definiert, eingerichtet ist, wobei die Einrichtung **dadurch gekennzeichnet ist, dass** sie weiter zur Durchführung der Schritte C) bis F), wie in Anspruch 1 definiert, eingerichtet ist.

10. Die Einrichtung von Anspruch 9, **dadurch gekennzeichnet, dass** jede der zumindest einen Hochfrequenzspule (40) als ein Kegelstumpf mit einer kleineren Basis und einer breiteren Oberseite geformt ist.

11. Die Einrichtung von Anspruch 9, **dadurch gekennzeichnet, dass** besagter zumindest eine Magnet (32) einen Hufeisenmagneten umfasst.

12. Die Einrichtung von Anspruch 9, **dadurch gekennzeichnet, dass** besagter zumindest eine Magnet (32) einen größeren und einen kleineren Hufeisenmagneten umfasst, sodass besagter kleinerer Hufeisenmagnet zwischen den Polen des besagten größeren Hufeisenmagneten (32) angeordnet ist.

13. Die Einrichtung von Anspruch 9, **dadurch gekennzeichnet, dass** besagter zumindest eine Magnet einen kopfüber aufgestellten "T"-Träger-Magneten umfasst.

14. Die Einrichtung von Anspruch 9, **dadurch gekennzeichnet, dass** besagter zumindest eine Magnet (32) zwei nebeneinander angeordnete Hufeisenmagnete (32) umfasst.

## Revendications

1.  Procédé de mesure de la résistance à la compression manifestée par une matière chimiquement active de type capillaire-poreux (24) lors du durcissement de celle-ci, la matière chimiquement active de type capillaire-poreux renfermant de l'eau qui subit une métamorphose progressive par interaction avec la phase solide de la matière (24), l'eau englobant une portion d'eau physiquement liée qui englobe de l'eau dans des pores de gel **caractérisée par** un temps de relaxation T2 d'environ 30 à 100 microsecondes, l'eau présente dans les plus gros capillaires de la matière étant **caractérisée par** un temps de relaxation T2 d'environ 100 à 300 microsecondes, le procédé comprenant les étapes consistant à :

    A) mettre en oeuvre une mesure de résonance magnétique nucléaire d'écho de spin à haute fréquence d'au moins ladite portion d'eau physiquement liée ;

    B) calculer une distribution T2 de ladite portion d'eau physiquement liée à partir de ladite mesure de résonance magnétique nucléaire d'écho de spin à haute fréquence ;

    le procédé étant **caractérisé par le fait que** :

    C) la fréquence de la mesure de résonance magnétique nucléaire d'écho de spin à haute fréquence est choisie pour se situer entre 7 MHz et 20 MHz ;

D) le procédé comprend le fait de détecter la distribution T2 de la fraction d'eau physiquement liée possédant un temps de relaxation T2 de 30 à 40 microsecondes, le procédé comprenant en outre les étapes consistant à :

E) calculer la quantité d'énergie de champ RF absorbée par ladite portion d'eau physiquement liée, englobant ladite fraction d'eau physiquement liée, en utilisant une relation fonctionnelle entre ladite énergie d'absorption et ladite distribution T2 ;

F) déterminer la résistance à la compression manifestée par ladite matière chimiquement active de type capillaire-poreux (24) en utilisant une relation entre ladite résistance à la compression et ladite quantité d'énergie de champ RF absorbé par ladite portion d'eau physiquement liée englobant ladite fraction d'eau physiquement liée.

2. Procédé selon la revendication 1, **caractérisé en ce que** ladite mesure est mise en oeuvre au moins à un moment correspondant au début de la prise et à un moment correspondant à la fin de la prise ; et ladite résistance à la compression est déterminée à différents stades de durcissement de la matière (24) en se basant sur ladite relation.

3. Procédé selon la revendication 1, dans lequel ladite matière (24) est une structure en béton, le béton renfermant ladite eau physiquement liée et ladite eau chimiquement liée, **caractérisé en ce que** ladite étape de mise en oeuvre de ladite mesure de résonance magnétique nucléaire d'écho de spin a lieu in situ.

4. Procédé selon la revendication 1 ou 3, **caractérisé en ce que** ladite résistance à la compression est déterminée à divers stades de durcissement de la matière (24), en se basant sur ladite relation.

5. Procédé selon la revendication 1, dans lequel ladite matière chimiquement active (24) de type capillaire-poreux englobe en outre une portion d'eau chimiquement liée possédant un temps de relaxation T2 de 10 à 17 microsecondes, ladite mesure de résonance magnétique nucléaire d'écho de spin de la matière (24) étant mise en oeuvre de façon à détecter les temps de relaxation T2 de ladite portion d'eau physiquement liée et de ladite portion d'eau chimiquement liée.

6. Procédé selon la revendication 1, dans lequel ladite matière chimiquement active (24) de type capillaire-poreux englobe en outre une portion d'eau chimiquement liée possédant un temps de relaxation T2 de 10 à 17 microsecondes, ladite étape de mise en oeuvre desdites mesures de résonance magnétique nucléaire d'écho de spin ayant lieu au moins à un moment correspondant au début de la prise et à un moment correspondant à la fin de la prise ; et ladite résistance à la compression est déterminée à divers stades de durcissement de la matière (24), en se basant sur ladite relation.

7. Procédé selon la revendication 1, dans lequel ladite matière (24) est une structure en béton, le béton renfermant ladite eau physiquement liée et une portion d'eau chimiquement liée possédant un temps de relaxation T2 de 10 à 17 microsecondes, le procédé comprenant la mise en oeuvre de ladite mesure de résonance magnétique nucléaire d'écho de spin in situ.

8. Procédé selon l'une quelconque des revendications 1 à 7, **caractérisé en ce qu'**on utilise un écran de radiofréquence (50) afin d'isoler de manière substantielle ladite mesure de résonance magnétique nucléaire d'écho de spin par rapport au bruit ambiant.

9. Appareil approprié pour la mesure de la résistance à la compression manifestée par une structure constituée d'une matière chimiquement active (24) de type capillaire-poreux lors du durcissement de celle-ci, la matière chimiquement active (24) de type capillaire-poreux renfermant de l'eau physiquement liée et de l'eau chimiquement liée, l'eau physiquement liée englobant de l'eau présente dans des pores de gel et dans des capillaires plus gros de la matière, l'appareil comprenant un générateur de résonance magnétique nucléaire par impulsions (30) pour générer un volume utile dans ladite structure afin d'y réaliser in situ une mesure de résonance magnétique nucléaire d'écho de spin à haute fréquence d'au moins ladite eau physiquement liée dans la matière chimiquement active (24) de type capillaire-poreux au cours du durcissement de celle-ci,

ledit générateur de résonance magnétique nucléaire par impulsions (30) englobant, dans un arrangement opérationnel :

(a) un générateur de champ magnétique statique inverse (32) conçu pour générer un champ magnétique statique (30) au sein dudit volume utile, ledit générateur de champ magnétique statique (32) englobant au moins un aimant (32) ;

(b) un générateur de champ électromagnétique à radiofréquence (34) conçu pour générer un champ électromagnétique à radiofréquence, ledit générateur de champ électromagnétique à radiofréquence (34) englobant au moins une bobine de radiofréquence (40) conçue de telle sorte que, dans ledit volume utile, les lignes de champ électromagnétique dudit champ électromagnétique à radiofréquence sont perpendiculaires aux lignes de champ électromagnétique (38) dudit champ magnétique statique (30) ; et

(c) un récepteur de résonance magnétique nucléaire (36) conçu pour recevoir des signaux de résonance magnétique nucléaire à partir de noyaux atomiques excitables dans ladite matière chimiquement active (24) de type capillaire-poreux, ledit récepteur étant relié à un moyen de traitement de données (42) procurant une sortie indiquant la résistance à la compression manifestée par la matière chimiquement active (24) de type capillaire-poreux, l'appareil étant arrangé pour mettre en oeuvre l'étape (B) telle que définie à la revendication 1, l'appareil étant **caractérisé en ce qu'**il est en outre arrangé pour mettre en oeuvre les étapes C) à F) telles que définies à la revendication 1.

**10.** Appareil selon la revendication 9, **caractérisé en ce que** chacune desdites au moins une bobine de radiofréquence (40) prend une configuration tronconique possédant une petite base et un sommet élargi.

**11.** Appareil selon la revendication 9, **caractérisé en ce que** ledit au moins un aimant 32 englobe un aimant en fer à cheval.

**12.** Appareil selon la revendication 9, **caractérisé en ce que** ledit au moins un aimant (32) englobe un aimant plus grand et un aimant plus petit en fer à cheval, de telle sorte que ledit aimant plus petit en fer à cheval est disposé entre les pôles dudit aimant plus grand (32) en fer à cheval.

**13.** Appareil selon la revendication 9, **caractérisé en ce que** ledit au moins un aimant englobe un aimant sous la forme d'une barre en T sens dessus-dessous.

**14.** Appareil selon la revendication 9, **caractérisé en ce que** ledit au moins un aimant (32) englobe deux aimants en fer à cheval (32), arrangés côte à côte.

Fig. 1

EP 1 269 221 B1

Fig. 2

Fig. 3

Fig. 4

Fig. 5

Fig. 6

$y = 1.6401x + 0.0591$
$R^2 = 0.9969$

♦ Experimental data
— Linear
(Experimental data)

EP 1 269 221 B1

Fig. 7

Fig. 8

EP 1 269 221 B1

Fig. 9

EP 1 269 221 B1

Fig. 10